# EUROPÄISCHE PATENTANMELDUNG

(11) **EP 4 351 275 A1**
(43) Veröffentlichungstag der Anmeldung: **10.04.2024**
(21) Anmeldenummer: 23198573.0
(22) Anmeldetag: 20.09.2023
(51) Int. Cl.: H05B 6/06, H05B 6/12

(54) **VORRICHTUNG ZUM DRAHTLOSEN ÜBERTRAGEN VON ENERGIE IN RICHTUNG EINES VERBRAUCHERS MITTELS INDUKTIVER KOPPLUNG**

(30) Priorität: 05.10.2022 DE 102022210534
(71) Anmelder: E.G.O. Elektro-Gerätebau GmbH, 75038 Oberderdingen (DE)
(72) Erfinder: Egenter, Christian, 75015 Bretten (DE); Wächter, Ulrich, 76646 Bruchsal (DE); Müller, Max-Felix, 75038 Oberderdingen (DE); Bellm, Mathias, 76698 Ubstadt-Weiher (DE)
(74) Vertreter: Patentanwälte Ruff, Wilhelm, Beier, Dauster & Partner mbB

(57) **Zusammenfassung**

Vorrichtung (100) zum drahtlosen Übertragen von Energie in Richtung eines Verbrauchers (200) mittels induktiver Kopplung, wobei die Vorrichtung (100) aufweist:
- einen Gleichrichter (101) zum Erzeugen einer Gleichspannung (UG) aus einer Netzspannung (UN),
- einen Wechselrichter (102), der dazu ausgebildet ist, ein pulsweitenmoduliertes Ansteuersignal (AS) zu erzeugen, und
- eine mittels des pulsweitenmodulierten Ansteuersignals (AS) angesteuerte Leistungsspule (103), mittels der zum Übertragen der Energie und zu Messzwecken ein magnetisches Wechselfeld erzeugbar ist,
- wobei der Wechselrichter (102) in einem ersten Betriebsmodus dazu ausgebildet ist, zum Übertragen der Energie das pulsweitenmodulierte Ansteuersignal (AS) in Abhängigkeit von der Gleichspannung (UG) zu erzeugen, und
- wobei der Wechselrichter in einem zweiten Betriebsmodus dazu ausgebildet ist, zu Messzwecken das pulsweitenmodulierte Ansteuersignal (AS) abhängig von einer Messspannung (UM) zu erzeugen, wobei während des zweiten Betriebsmodus die Gleichspannung (UG) größer als die Messspannung (UM) ist.

## Beschreibung

Der Erfindung liegt die Aufgabe zugrunde, eine Vorrichtung zum drahtlosen Übertragen von Energie in Richtung eines Verbrauchers mittels induktiver Kopplung und/oder zum Erwärmen eines Kochgeschirrs mittels Induktion von Wirbelströmen zur Verfügung zu stellen, mittels der möglichst einfach und zuverlässig betriebsrelevante Messwerte zur Verfügung gestellt werden können.

Die erfindungsgemäße Vorrichtung ist zum drahtlosen Übertragen von Energie in Richtung eines Verbrauchers mittels induktiver Kopplung und/oder zum Erwärmen eines Kochgeschirrs mittels Induktion von Wirbelströmen ausgebildet. Bei dem Verbraucher kann es sich beispielsweise um ein herkömmliches, induktiv beheizbares Kochgeschirr und/oder um einen elektrischen Verbraucher handeln, der mittels induktiver Kopplung, auch als Wireless Power Transfer (WPT) bezeichnet, mit elektrischer Energie versorgt wird. Hinsichtlich der Grundlagen zu WPT sei auch auf die einschlägige Fachliteratur verwiesen. Die Vorrichtung kann beispielsweise eine Induktionsheizeinrichtung bilden und/oder gemäß dem WPC (Wireless Power Consortium) Ki (Cordless Kitchen) Verfahren betrieben werden.

Die Vorrichtung weist einen herkömmlichen einphasigen oder mehrphasigen Gleichrichter zum Erzeugen einer Gleichspannung oder Zwischenkreisspannung aus einer insbesondere sinusförmigen Netzspannung auf.

Die Vorrichtung weist weiter einen Wechselrichter auf, der dazu ausgebildet ist, ein pulsweitenmoduliertes Ansteuersignal zu erzeugen. Der Wechselrichter kann beispielsweise ein Halbbrücken-Wechselrichter oder ein Vollbrücken-Wechselrichter sein.

Die Vorrichtung weist weiter eine mittels des pulsweitenmodulierten Ansteuersignals angesteuerte Leistungsspule auf, mittels der zum Übertragen der Energie und zu Messzwecken ein magnetisches Wechselfeld erzeugbar ist. Das Ansteuersignal kann beispielsweise eine Ansteuerspannung sein.

Der Wechselrichter ist in einem ersten Betriebsmodus dazu ausgebildet, zum Übertragen der Energie das pulsweitenmodulierte Ansteuersignal in Abhängigkeit von bzw. aus der der Gleichspannung zu erzeugen. Das Ansteuersignal weist im ersten Betriebsmodus typisch einen von einem Leistungs-Sollwert abhängigen bzw. zu dem Leistungs-Sollwert passenden Arbeitspunkt auf. Ein Arbeitspunkt bezeichnet hierbei insbesondere eine oder mehrere Eigenschaften des Ansteuersignals, beispielsweise Amplitude, Tastgrad und/oder Frequenz des Ansteuersignals.

Der Wechselrichter ist in einem zweiten Betriebsmodus dazu ausgebildet, zu Messzwecken das pulsweitenmodulierte Ansteuersignal abhängig von bzw. aus einer Messspannung zu erzeugen, wobei während des zweiten Betriebsmodus die Gleichspannung bevorzugt immer größer als die Messspannung ist.

In einer Ausführungsform weist der Wechselrichter auf: ein erstes Halbleiterschaltmittel, ein zweites Halbleiterschaltmittel und ein drittes Halbleiterschaltmittel, beispielsweise jeweils in Form eines IGBT. Das erste Halbleiterschaltmittel und das zweite Halbleiterschaltmittel sind in Reihe zwischen einen ersten Schaltungsknoten und einen zweiten Schaltungsknoten eingeschleift, wobei zwischen dem ersten Schaltungsknoten und dem zweiten Schaltungsknoten die Gleichspannung ansteht und wobei ein Verbindungsknoten des ersten Halbleiterschaltmittels und des zweiten Halbleiterschaltmittels elektrisch mit der Leistungsspule verbunden ist. Das dritte Halbleiterschaltmittel und das erste Halbleiterschaltmittel sind in Reihe zwischen einen dritten Schaltungsknoten und den zweiten Schaltungsknoten eingeschleift, wobei zwischen dem dritten Schaltungsknoten und dem zweiten Schaltungsknoten die Messspannung ansteht. An dem zweiten Schaltungsknoten kann ein Bezugspotential, beispielsweise Masse, anstehen.

Unter einem Schaltungsknoten im Sinne der vorliegenden Anmeldung werden insbesondere elektrisch miteinander verbundene Schaltungsteile verstanden, die ein identisches Potential führen.

In einer Ausführungsform weist der Wechselrichter auf: eine Entkopplungsdiode, wobei das dritte Halbleiterschaltmittel, die Entkopplungsdiode und das erste Halbleiterschaltmittel in Reihe zwischen den dritten Schaltungsknoten und den zweiten Schaltungsknoten eingeschleift sind.

In einer Ausführungsform weist der Wechselrichter auf: ein viertes Halbleiterschaltmittel, wobei das dritte Halbleiterschaltmittel, das vierte Halbleiterschaltmittel und das erste Halbleiterschaltmittel in Reihe zwischen den dritten Schaltungsknoten und den zweiten Schaltungsknoten eingeschleift sind.

In einer Ausführungsform wird während des ersten Betriebsmodus zum Erzeugen des pulsweitenmodulierten Ansteuersignals ein Schaltzustand des ersten Halbleiterschaltmittels und des zweiten Halbleiterschaltmittels fortlaufend verändert.

In einer Ausführungsform bleibt während des ersten Betriebsmodus ein Schaltzustand des dritten Halbleiterschaltmittels unverändert.

In einer Ausführungsform wird während des zweiten Betriebsmodus zum Erzeugen des pulsweitenmodulierten Ansteuersignals ein Schaltzustand des ersten Halbleiterschaltmittels und des dritten Halbleiterschaltmittels fortlaufend verändert und ein Schaltzustand des zweiten Halbleiterschaltmittels bleibt unverändert.

In einer Ausführungsform umfassen die Messzwecke ein Bestimmen von Eigenschaften von Objekten im Wirkbereich des erzeugten Magnetfelds der Leistungsspule.

In einer Ausführungsform sind die Objekte Kochgeschirre, wobei erfindungsgemäß beispielsweise deren Größe und Material bestimmbar sind.

In einer Ausführungsform umfassen die Messzwecke ein Bestimmen einer Übertragungsfunktion. Insbesondere charakterisiert die Übertragungsfunktion eine mittels der Vorrichtung in Richtung des Verbrauchers übertragbare elektrische Leistung über der Frequenz.

In einer Ausführungsform umfassen die Messzwecke ein Bestimmen einer charakteristischen Frequenz, wobei bei der charakteristischen Frequenz ein vorgegebener Phasenwinkel zwischen einer an der Leistungsspule anstehenden Spannung und einem durch die Leistungsspule fließenden Strom vorliegt.

In einer Ausführungsform werden zu den Messzwecken Ströme, und/oder Spannungen und/oder eine Phasenlage zwischen den Strömen und den Spannungen ausgewertet.

In einer Ausführungsform werden in dem zweiten Betriebsmodus Sensoren im Wirkbereich des magnetisches Wechselfelds mit Betriebsenergie versorgt.

Umrichter zur induktiven Übertragung von elektrischer Leistung beispielsweise für Haushaltsgeräte werden typischerweise mit Netzspannung versorgt, wobei die Netzspannung gleichgerichtet wird. Der anschließende Zwischenkreis benötigt einen Zwischenkreiskondensator zum Kurzschließen der HF-Ströme des Wechselrichters. Der Zwischenkreiskondensator wird üblicherweise eher klein gewählt, so dass die Zwischenkreisspannung pulsierend der Netzspannung folgt. Bei ausreichend großer Leistungsübertragung wird der Zwischenkreis im Nulldurchgang fast vollständig entladen, so dass in einem Zeitintervall um die Nulldurchgänge herum eine kleinere, meist konstante, unabhängige Messpannung erzeugt bzw. eingespeist werden kann, die bei höheren Zwischenkreisspannungen über eine Diode wieder entkoppelt wird. Insoweit sei beispielsweise auf die DE 10 200 9047 185 B4 verwiesen.

Mit der im Bereich der Nulldurchgänge konstanten, kleineren Messpannung können Sensorfunktionen für die Bedeckung der Induktionsheizspule durch geeignete Ansteuerung des Wechselrichters sowie Messung von Strom und/oder Spannung durch die bzw. an der Induktionsheizspule realisiert werden. So kann beispielsweise der Bedeckungsgrad durch ein Kochgeschirr oder eine Temperaturänderung des Kochgeschirrs ohne relevante Veränderung der übertragenen Leistung gemessen werden. Ein kleine Messpannung ist insbesondere für niederimpedante Sensoren im Bereich ihrer Resonanzfrequenz von Vorteil, da hierbei die auftretenden Ströme sehr groß werden können.

Bei einem Umrichter zur induktiven Versorgung eines kabellosen Verbrauchers kann beispielsweise mit der Messpannung eine Anregung für eine Objekterkennung generiert werden, mittels der metallischen Gegenstände über der Leistungsspule erkannt werden können, die vor einer Leistungsübertragung von einem Benutzer entfernt werden müssen, da diese Objekte sich sonst unbeabsichtigt auf hohe Temperaturen erwärmen können. Insoweit sei beispielsweise auf die EP 3 836 352 A1 verwiesen.

Mittels der Erfindung ist es möglich, auch bei hohen Zwischenkreisspannungen bzw. nicht ausreichend entladenem Zwischenkreis die Leistungsspule mit der Messspannung anzusteuern und so eine Messfunktion bei geringem Spannungsniveau zu ermöglichen. Insbesondere ist es aufgrund der Erfindung nicht notwendig, den Zwischenkreis aktiv auf ein Niveau gleich oder unter die Messpannung zu entladen. Vor einem Start des ersten Betriebsmodus ist der Zwischenkreis üblicherweise mit der Amplitude der Netzspannung geladen. Auch beim Betrieb mit kleinen Leistungen wird der Zwischenkreis nicht ausreichend entladen, weshalb im Stand der Technik eine aktive Entladung vor dem zweiten Betriebsmodus notwendig ist. Mittels der Erfindung können Bauteile einer entsprechenden Entladeschaltung sowie deren Verluste eingespart werden.

Die Erfindung wird nachfolgend unter Bezugnahme auf die Zeichnungen detailliert beschrieben. Hierbei zeigt:
- Fig. 1: ein Schaltbild einer Vorrichtung zum drahtlosen Übertragen von Energie in Richtung eines Verbrauchers mittels induktiver Kopplung gemäß einer ersten Ausführungsform,
- Fig. 2: ein Schaltbild einer Vorrichtung zum drahtlosen Übertragen von Energie in Richtung eines Verbrauchers mittels induktiver Kopplung gemäß einer zweiten Ausführungsform,
- Fig. 3: einen zeitlichen Verlauf von Ansteuersignalen von Halbleiterschaltmitteln der in Fig. 1 gezeigten Ausführungsform, und
- Fig. 4: einen zeitlichen Verlauf von Ansteuersignalen von Halbleiterschaltmitteln der in Fig. 2 gezeigten Ausführungsform.

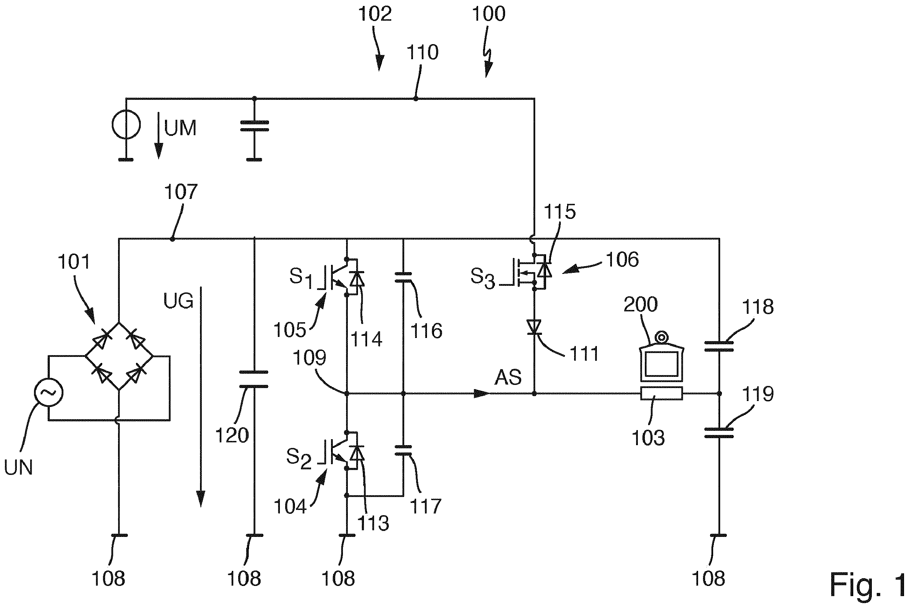

Fig. 1 zeigt eine Vorrichtung 100 zum drahtlosen Übertragen von Energie in Richtung eines Verbrauchers 200 in Form eines induktiv beheizbaren Kochgeschirrs mittels induktiver Kopplung. Die Vorrichtung 100 kann eine Induktionsheizeinrichtung bilden.

Die Vorrichtung 100 weist auf: einen herkömmlichen Brücken-Gleichrichter 101 zum Erzeugen einer mittels eines Zwischenkreiskondensators 120 gepufferten Gleichspannung bzw. Zwischenkreisspannung UG aus einer sinusförmigen Netzspannung UN, einen Wechselrichter 102, der dazu ausgebildet ist, ein pulsweitenmoduliertes Ansteuersignal AS zu erzeugen, und eine mittels des pulsweitenmodulierten Ansteuersignals AS angesteuerte Leistungsspule 103, mittels der zum Übertragen der Energie und zu Messzwecken ein magnetisches Wechselfeld erzeugbar ist. Die Leistungsspule 103 kann eine herkömmliche Induktionsheizspule sein.

Der Wechselrichter 102 ist in einem ersten Betriebsmodus dazu ausgebildet, zum Übertragen der Energie das pulsweitenmodulierte Ansteuersignal AS in Abhängigkeit von der Gleichspannung UG zu erzeugen, und ist in einem zweiten Betriebsmodus dazu ausgebildet, zu Messzwecken das pulsweitenmodulierte Ansteuersignal AS abhängig von einer Messspannung UM zu erzeugen, wobei während des zweiten Betriebsmodus die Gleichspannung UG größer als die Messspannung UM ist. Die Messspannung UM kann beispielsweise in einem Spanungsbereich zwischen 5 V und 40 V liegen. Die Messspannung UM ist unabhängig von der Gleichspannung UG.

Der Wechselrichter 102 weist ein erstes Halbleiterschaltmittel 104 angesteuert durch ein Signal S2, ein zweites Halbleiterschaltmittel 105 angesteuert durch ein Signal S1 und ein drittes Halbleiterschaltmittel 106 angesteuert durch ein Signal S3 auf.

Das erste Halbleiterschaltmittel 104 und das zweite Halbleiterschaltmittel 105 sind in Reihe zwischen einen ersten Schaltungsknoten 107 und einen zweiten Schaltungsknoten 108 eingeschleift, wobei zwischen dem ersten Schaltungsknoten 107 und dem zweiten Schaltungsknoten 108 die Gleichspannung UG ansteht und wobei ein Verbindungsknoten 109 des ersten Halbleiterschaltmittels 104 und des zweiten Halbleiterschaltmittels 105 elektrisch mit der Leistungsspule 103 verbunden ist.

Das dritte Halbleiterschaltmittel 106 und das erste Halbleiterschaltmittel 104 sind in Reihe zwischen einen dritten Schaltungsknoten 110 und den zweiten Schaltungsknoten 108 eingeschleift, wobei zwischen dem dritten Schaltungsknoten 110 und dem zweiten Schaltungsknoten 108 die Messspannung UM ansteht.

Freilaufdioden 113, 114 und 115 sind den Halbleiterschaltmitteln 104, 105 bzw. 106 parallel geschaltet.

Ein Snubber-Kondensator 116 ist dem Halbleiterschaltmittel 105 parallel geschaltet und ein Snubber-Kondensator 117 ist dem Halbleiterschaltmittel 104 parallel geschaltet.

Kondensatoren 118 und 119 sind in Reihe zwischen den ersten Schaltungsknoten 107 und den zweiten Schaltungsknoten 108 eingeschleift. Die Leistungsspule 103 ist zwischen den Verbindungsknoten 109 des ersten Halbleiterschaltmittels 104 und des zweiten Halbleiterschaltmittels 105 und einen Verbindungsknoten der Kondensatoren 118 und 119 eingeschleift.

Der Wechselrichter 102 weist weiter eine Entkopplungsdiode 111 auf, wobei das dritte Halbleiterschaltmittel 106, die Entkopplungsdiode 111 und das erste Halbleiterschaltmittel 104 in Reihe zwischen den dritten Schaltungsknoten 110 und den zweiten Schaltungsknoten 108 eingeschleift sind.

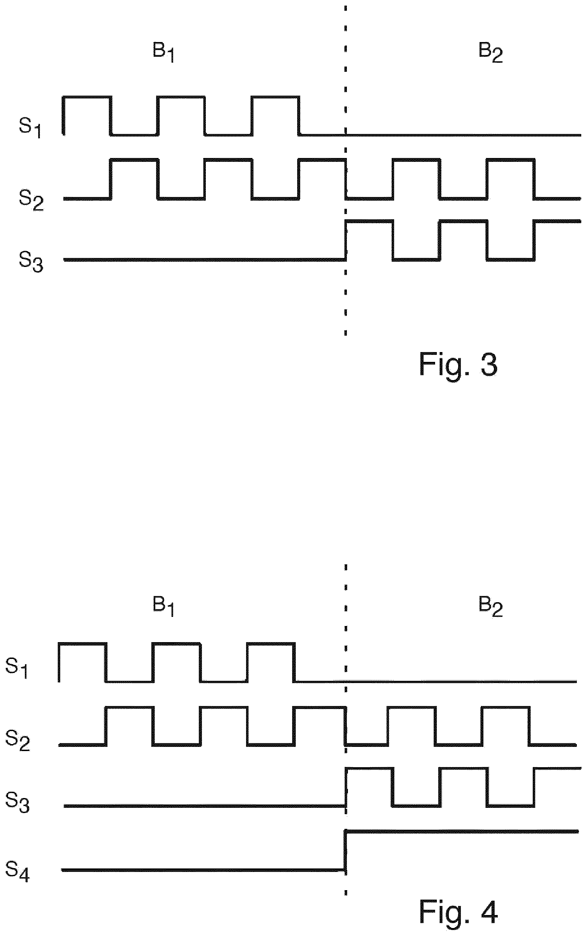

Fig. 3 zeigt einen zeitlichen Verlauf der Ansteuersignale S1 bis S3 der Halbleiterschaltmittel 105, 104 bzw. 106.

Wie gezeigt, wird während des ersten Betriebsmodus B1 zum Erzeugen des pulsweitenmodulierten Ansteuersignals AS ein Schaltzustand des ersten Halbleiterschaltmittels 104 und des zweiten Halbleiterschaltmittels 105 fortlaufend verändert. Während des ersten Betriebsmodus B1 bleibt ein Schaltzustand des dritten Halbleiterschaltmittels 106 unverändert.

Während des zweiten Betriebsmodus B2 zum Erzeugen des pulsweitenmodulierten Ansteuersignals AS wird ein Schaltzustand des ersten Halbleiterschaltmittels 104 und des dritten Halbleiterschaltmittels 106 fortlaufend verändert und ein Schaltzustand des zweiten Halbleiterschaltmittels 105 bleibt unverändert.

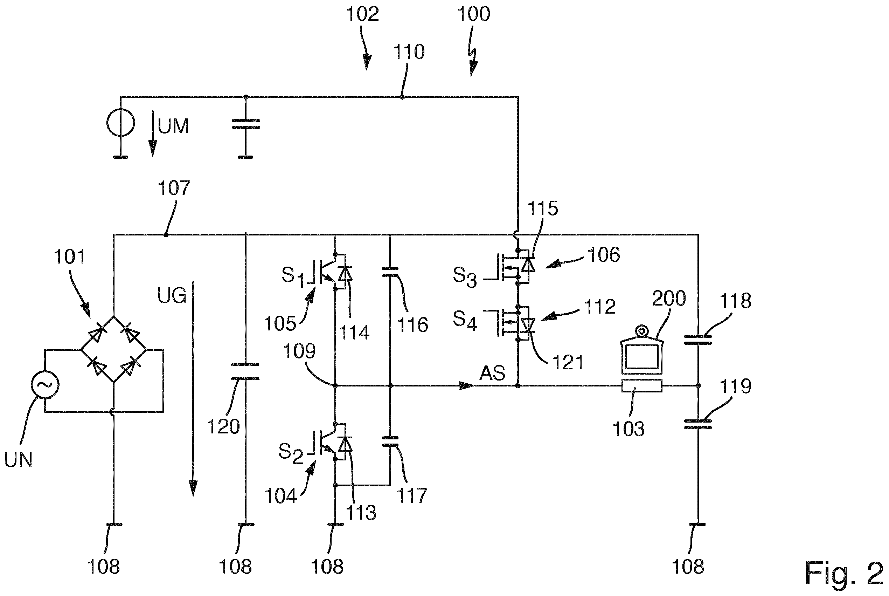

Fig. 2 zeigt ein Schaltbild einer Vorrichtung 100 zum drahtlosen Übertragen von Energie in Richtung des Verbrauchers 200 mittels induktiver Kopplung gemäß einer zweiten Ausführungsform.

Die Entkopplungsdiode 111 der in Fig. 1 gezeigten Ausführungsform ist ergänzt durch ein viertes Halbleiterschaltmittel 112, das mittels eines vierten Ansteuersignals S4 angesteuert ist, wobei das dritte Halbleiterschaltmittel 106, das vierte Halbleiterschaltmittel 112 und das erste Halbleiterschaltmittel 104 in Reihe zwischen den dritten Schaltungsknoten 110 und den zweiten Schaltungsknoten 108 eingeschleift sind. Dem vierten Halbleiterschaltmittel 112 ist eine Freilaufdiode 121 parallel geschaltet. Das vierte Halbleiterschaltmittel 112 ermöglicht einen Freilaufstrom zur Messspannung UM.

Fig. 4 zeigt einen zeitlichen Verlauf der Ansteuersignale S1 bis S4 der Halbleiterschaltmittel 105, 104, 106 bzw. 112. Das Ansteuersignal S4 ist während des ersten Betriebsmodus B1 dauerhaft inaktiv, d.h. das vierte Halbleiterschaltmittel 112 sperrt. Das Ansteuersignal S4 ist während des zweiten Betriebsmodus B2 dauerhaft aktiv, d.h. das vierte Halbleiterschaltmittel 112 leitet.

Erfindungsgemäß muss der Zwischenkreiskondensator 120 zu Messzwecken nicht entladen werden. Stattdessen wird die Leistungsspule 103 mit der Messpannung UM über das zusätzliche Halbleiterschaltmittel 106 in Serie zur Entkopplungsdiode 111 bzw. dem vierten Halbleiterschaltmittel 112 beaufschlagt. Dies erlaubt die Durchführung von Messungen mit der Leistungsspule 103 auch bei hoher Gleichspannung bzw. Zwischenkreisspannung UG.

Herkömmlich können Messungen mit Messspannung nur in kurzen Zeitintervallen um die Netznulldurchgänge der Netzspannung UN herum durchgeführt werden, sofern der Zwischenkreis zuvor entladen wurde. Die Entladung erfolgt automatisch durch den Umrichter, sofern eine ausreichen große Leistung an die Leistungsspule 103 abgegeben wird. Soll aber nur eine kleine oder gar keine Leistung an der Leistungsspule 103 abgegeben werden, so wird der Zwischenkreiskondensator 120 nicht oder zumindest nicht vollständig entladen. Dann muss herkömmlich der Zwischenkreis vor oder zu Beginn der Messung entladen werden.

Die erfindungsgemäße Vorrichtung 100 weist eine Transmitterspule bzw. Leistungsspule 103 auf, insbesondere in Form einer Induktionsheizspule zum Erwärmen eines Kochgeschirrs 200 mittels Induktion von Wirbelströmen, und/oder zum kabellosen Übertragen von Leistung an einen Verbraucher. Die Leistungsspule 103 kann sowohl zum Übertragen von elektrischer Leistung als auch zum Bestimmen von Eigenschaften von Gegenständen im Wirkbereich des erzeugten magnetischen Wechselfelds der Leistungsspule 103 verwendet werden.

Der erste Betriebsmodus B1 dient zum Beheizen des Kochgeschirrs 200 und/oder Übertragen von Leistung an einen elektrischen Verbraucher, beispielweise mittels WPT.

Der zweite Betriebsmodus B2 dient zum Bestimmen von Eigenschaften von Objekten im Wirkbereich des erzeugten magnetischen Wechselfelds der Leistungsspule 103.

Der zweite Betriebsmodus B2 kann eingestellt werden, solange die Gleichspannung UG größer ist als die Messpannung UM.

Das Halbleiterschaltmittel 104 wird in beiden Betriebsmodi B1 und B2 geschaltet. Das Halbleiterschaltmittel 104 bildet im ersten Betriebsmodus B1 mit dem Halbleiterschaltmittel 105 eine Halbrücke und bildet im zweiten Betriebsmodus B2 mit dem Halbleiterschaltmittel 106 eine Halbrücke.

Aus dem Zwischenkreis bzw. dem Zwischenkreiskondensator 120 können weitere, nicht dargestellte Wechselrichter vorsorgt sein, wobei zeitgleich einer der Wechselrichter im ersten Betriebsmodus betrieben werden kann und die anderen Wechselrichter im zweiten Betriebsmodus betrieben werden können.

Bei der in Fig. 1 gezeigten Ausführungsform ist in Serie zu dem Halbleiterschaltmittel 106 die Entkopplungsdiode 111 vorgesehen, so dass die Messpannung UM im ersten Betriebsmodus vom Zwischenkreis entkoppelt bleibt. Die Freilaufdiode 115 ist daher nicht zwingend notwendig. Der verhinderte Freilaufstrom zur Messpannung UM kann alternativ auf die Snubber-Kondensatoren 116 und 117 kommutieren, wodurch sich die Spannung am Knoten 109 der Halbbrücke erhöht. Erreicht die Spannung das Niveau der Zwischenkreisspannung UG, verhindert die Freilaufdiode 114 einen weiteren Spannungsanstieg. Sobald sich das Vorzeichen des Stroms durch die Leistungsspule 103 umkehrt, reduziert sich die Spannung der Snubber-Kondensatoren 116 und 117 auf das Niveau der Messpannung UM, so dass nun Strom von der Messpannung UM über das Halbleiterschaltmittel 106 und die Entkopplungsdiode 111 eingespeist werden kann. Der beschriebene Kommutierungseffekt durch den verhinderten Freilaufstrom bewirkt eine kurzzeitige Erhöhung der Brückenspannung am Knoten 109, d.h. auch die mittlere Brückenspannung erhöht sich abhängig vom Freilaufstrom.

Soll dieser Effekt verhindert werden, so kann wie in der in Fig. 2 gezeigten Ausführungsform ein invers zum Halbleiterschaltmittel 106 angeordnetes Halbleiterschaltmittel 112 parallel zur Freilauf- bzw. Entkopplungsdiode 111 bzw. 121 hinzugefügt werden, so dass der Freilaufstrom durch die Freilaufdiode 115 direkt in die Messpannung UM eingespeist werden kann.

Die Halbleiterschaltmittel 105 und 106 liegen quasi parallel und verbinden die Leistungsspule 103 mit der Gleichspannung bzw. Zwischenkreisspannung UG oder der Messpannung UM. Beide Schaltmittel besitzen im Wesentlichen die Brückenspannung als Bezugspotential, d.h. sie können kostengünstig mit einem gemeinsamen Ansteuersignal und durch einen gemeinsamen Treiber geschaltet werden, wobei entweder beide oder zumindest die Ansteuerung des Halbleiterschaltmittels 105 abschaltbar sein muss, damit dieser für den Messbetrieb bzw. den zweiten Betriebsmodus gesperrt bleibt.

## Patentansprüche

1. Vorrichtung (100) zum drahtlosen Übertragen von Energie in Richtung eines Verbrauchers (200) mittels induktiver Kopplung und/oder zum Erwärmen eines Kochgeschirrs (200) mittels Induktion von Wirbelströmen, wobei die Vorrichtung (100) aufweist:
- einen Gleichrichter (101) zum Erzeugen einer Gleichspannung (UG) aus einer Netzspannung (UN),
- einen Wechselrichter (102), der dazu ausgebildet ist, ein pulsweitenmoduliertes Ansteuersignal (AS) zu erzeugen, und
- eine mittels des pulsweitenmodulierten Ansteuersignals (AS) angesteuerte Leistungsspule (103), mittels der zum Übertragen der Energie und zu Messzwecken ein magnetisches Wechselfeld erzeugbar ist,
**dadurch gekennzeichnet, dass**
- der Wechselrichter (102) in einem ersten Betriebsmodus (B1) dazu ausgebildet ist, zum Übertragen der Energie das pulsweitenmodulierte Ansteuersignal (AS) in Abhängigkeit von der Gleichspannung (UG) zu erzeugen, und
- der Wechselrichter in einem zweiten Betriebsmodus (B2) dazu ausgebildet ist, zu Messzwecken das pulsweitenmodulierte Ansteuersignal (AS) abhängig von einer Messspannung (UM) zu erzeugen, wobei während des zweiten Betriebsmodus die Gleichspannung (UG) größer als die Messspannung (UM) ist.

2. Vorrichtung (100) nach Anspruch 1, **dadurch gekennzeichnet, dass**
- der Wechselrichter aufweist:
- ein erstes Halbleiterschaltmittel (104),
- ein zweites Halbleiterschaltmittel (105), und
- ein drittes Halbleiterschaltmittel (106),
- wobei das erste Halbleiterschaltmittel (104) und das zweite Halbleiterschaltmittel (105) in Reihe zwischen einen ersten Schaltungsknoten (107) und einen zweiten Schaltungsknoten (108) eingeschleift sind, wobei zwischen dem ersten Schaltungsknoten (107) und dem zweiten Schaltungsknoten (108) die Gleichspannung (UG) ansteht und wobei ein Verbindungsknoten (109) des ersten Halbleiterschaltmittels (104) und des zweiten Halbleiterschaltmittels (105) elektrisch mit der Leistungsspule (103) verbunden ist, und
- wobei das dritte Halbleiterschaltmittel (106) und das erste Halbleiterschaltmittel (104) in Reihe zwischen einen dritten Schaltungsknoten (110) und den zweiten Schaltungsknoten (108) eingeschleift sind, wobei zwischen dem dritten Schaltungsknoten (110) und dem zweiten Schaltungsknoten (108) die Messspannung (UM) ansteht.

3. Vorrichtung (100) nach Anspruch 2, **dadurch gekennzeichnet, dass**
- der Wechselrichter (102) aufweist:
- eine Entkopplungsdiode (111), wobei das dritte Halbleiterschaltmittel (106), die Entkopplungsdiode (111) und das erste Halbleiterschaltmittel (104) in Reihe zwischen den dritten Schaltungsknoten (110) und den zweiten Schaltungsknoten (108) eingeschleift sind.

4. Vorrichtung (100) nach Anspruch 2, **dadurch gekennzeichnet, dass**
- der Wechselrichter (102) aufweist:
- ein viertes Halbleiterschaltmittel (112), wobei das dritte Halbleiterschaltmittel (106), das vierte Halbleiterschaltmittel (112) und das erste Halbleiterschaltmittel (104) in Reihe zwischen den dritten Schaltungsknoten (110) und den zweiten Schaltungsknoten (108) eingeschleift sind.

5. Vorrichtung (100) nach einem der Ansprüche 2 bis 4, **dadurch gekennzeichnet, dass**
- während des ersten Betriebsmodus zum Erzeugen des pulsweitenmodulierten Ansteuersignals (AS) ein Schaltzustand des ersten Halbleiterschaltmittels (104) und des zweiten Halbleiterschaltmittels (105) fortlaufend verändert wird.

6. Vorrichtung (100) nach Anspruch 5, **dadurch gekennzeichnet, dass**
- während des ersten Betriebsmodus ein Schaltzustand des dritten Halbleiterschaltmittels (106) unverändert bleibt.

7. Vorrichtung (100) nach einem der Ansprüche 2 bis 6, **dadurch gekennzeichnet, dass**
- während des zweiten Betriebsmodus zum Erzeugen des pulsweitenmodulierten Ansteuersignals (AS) ein Schaltzustand des ersten Halbleiterschaltmittels (104) und des dritten Halbleiterschaltmittels (106) fortlaufend verändert wird und ein Schaltzustand des zweiten Halbleiterschaltmittels (105) unverändert bleibt.

8. Vorrichtung (100) nach einem der vorhergehenden Ansprüche, **dadurch gekennzeichnet, dass**
- die Messzwecke ein Bestimmen von Eigenschaften von Objekten im Wirkbereich des erzeugten Magnetfelds der Leistungsspule (103) umfassen.

9. Vorrichtung (100) nach Anspruch 8, **dadurch gekennzeichnet, dass**
- die Objekte Kochgeschirre (200) sind.

10. Vorrichtung (100) nach einem der vorhergehenden Ansprüche, **dadurch gekennzeichnet, dass**
- die Messzwecke ein Bestimmen einer Übertragungsfunktion umfassen, wobei die Übertragungsfunktion eine mittels der Vorrichtung (100) in Richtung des elektrischen Verbrauchers (200) übertragbare elektrische Leistung über der Frequenz charakterisiert.

11. Vorrichtung (100) nach einem der vorhergehenden Ansprüche, **dadurch gekennzeichnet, dass**
- die Messzwecke ein Bestimmen einer charakteristischen Frequenz umfassen, wobei bei der charakteristischen Frequenz ein vorgegebener Phasenwinkel zwischen einer an der Leistungsspule (103) anstehenden Spannung und einem durch die Leistungsspule (103) fließenden Strom gegeben ist.

12. Vorrichtung (100) nach einem der vorhergehenden Ansprüche, **dadurch gekennzeichnet, dass**
- zu den Messzwecken Ströme, und/oder Spannungen und/oder eine Phasenlage zwischen den Strömen und den Spannungen ausgewertet werden.

13. Vorrichtung (100) nach einem der vorhergehenden Ansprüche, **dadurch gekennzeichnet, dass** in dem zweiten Betriebsmodus Sensoren im Wirkbereich des magnetisches Wechselfelds mit Betriebsenergie versorgt werden.
